# EUROPÄISCHE PATENTANMELDUNG

(11) **EP 4 701 224 A1**
(43) Veröffentlichungstag der Anmeldung: **25.02.2026**
(21) Anmeldenummer: 25197327.7
(22) Anmeldetag: 21.08.2025
(51) Int. Cl.: H04R 1/10, G01S 13/02, G01S 13/32, H04R 25/00, G01S 7/41, G01S 13/34, G01S 13/58, G01S 13/86, G01S 13/93

(54) **HÖRINSTRUMENT**

(30) Priorität: 23.08.2024 WO PCT/EP2024/073669; 06.09.2024 DE 102024208513
(71) Anmelder: Sivantos Pte. Ltd., Singapore 539775 (SG)
(72) Erfinder: WÜNSCHE, Simon, 91058 Erlangen (DE)
(74) Vertreter: FDST Patentanwälte

(57) **Zusammenfassung**

Es wird ein Hörinstrument (1) beschrieben, aufweisend einen am Körper, insbesondere am Kopf, eines Nutzers zu tragenden Gerätekörper (2), eine CW-Radareinheit (10), die in oder an dem Gerätekörper (2) angeordnet ist und die dazu eingerichtet ist, ein, insbesondere unmoduliertes, CW-Radarsignal auszusenden und ein korrespondierendes, reflektiertes Radarsignal zu empfangen, und einen Controller (6), der dazu eingerichtet ist, einen für einen Mikrodopplereffekt charakteristischen Signalanteil aus einem von der CW-Radareinheit (10) auf den Empfang des reflektierten Radarsignals ausgegebenen Radarempfangssignal zu detektieren und daraus eine Entfernung des Gerätekörpers (2) zu einem Objekt (20) in einer Umgebung des Nutzers zu ermitteln.

## Beschreibung

Die Erfindung betrifft ein Hörinstrument, bspw. ein Hörhilfegerät.

Hörinstrumente dienen üblicherweise zur Ausgabe eines Tonsignals an das Gehör des Trägers dieser Hörvorrichtung. Die Ausgabe erfolgt dabei mittels eines Ausgabewandlers, meist auf akustischem Weg über Luftschall mittels eines Lautsprechers (auch als "Hörer" oder "Receiver" bezeichnet). Häufig kommen derartige Hörinstrumente dabei als sogenannte Hörhilfegeräte (auch kurz: Hörgeräte) zum Einsatz. Dazu umfassen die Hörinstrumente normalerweise einen akustischen Eingangswandler (insbesondere ein Mikrophon) und einen Signalprozessor, der dazu eingerichtet ist, das von dem Eingangswandler aus dem Umgebungsschall erzeugte Eingangssignal (auch: Mikrophonsignal) unter Anwendung mindestens eines üblicherweise nutzerspezifisch hinterlegten Signalverarbeitungsalgorithmus derart zu verarbeiten, dass eine Hörminderung des Trägers der Hörvorrichtung zumindest teilweise kompensiert wird. Insbesondere im Fall eines Hörhilfegeräts kann es sich bei dem Ausgabewandler neben einem Lautsprecher auch alternativ um einen sogenannten Knochenleitungshörer oder ein Cochlea-Implantat handeln, die zur mechanischen oder elektrischen Einkopplung des Tonsignals in das Gehör des Trägers eingerichtet sind. Daneben gibt es Hörinstrumente, die das Hörvermögen von normalhörenden Nutzern schützen oder verbessern, zum Beispiel in komplexen Hörsituationen ein verbessertes Sprachverständnis ermöglichen sollen. Solche Geräte werden auch als "Personal Sound Amplification Products" (kurz: PSAP) bezeichnet. Unter den Begriff Hörinstrumente fallen zusätzlich insbesondere auch Geräte wie z.B. sogenannte Tinnitus-Masker, Headsets, Kopfhörer und dergleichen.

Typische Bauformen von Hörinstrumenten, insbesondere Hörgeräten, sind Hinter-dem-Ohr- ("BTE"-) und In-dem-Ohr- ("IdO"- oder "ITE"-) Hörinstrumente. Diese Bezeichnungen zielen auf die bestimmungsgemäße Trageposition ab. So weisen Hinter-dem-Ohr-Hörinstrumente ein (Haupt-) Gehäuse auf, das hinter der Ohrmuschel getragen wird. Hier kann in Modelle unterschieden werden, deren Lautsprecher in diesem Gehäuse angeordnet ist - die Schallausgabe an das Ohr erfolgt dabei üblicherweise mittels eines Schallschlauchs, der im Gehörgang getragen wird - sowie in Modelle, die einen externen Lautsprecher, der im Gehörgang platziert wird, aufweisen. In-dem-Ohr-Hörinstrumente weisen hingegen ein Gehäuse auf, das in der Ohrmuschel oder sogar vollständig im Gehörgang getragen wird.

Der (den wenigstens einen Signalverarbeitungsalgorithmus nutzende) Signalprozessor eines Hörinstruments ist meist auch dazu eingerichtet, unterschiedliche Hörsituationen zu erkennen und die Signalverarbeitung abhängig davon einzustellen. Teilweise sind hierfür Hörprogramme (meist realisiert durch spezifische Parametersätze für den oder den jeweiligen Signalverarbeitungsalgorithmus) hinterlegt, die dann "aktiviert" werden. Beispielhaft sind hier häufig Hörprogramme für Musik, Gespräche in Ruhe, Gespräche mit Hintergrundgeräuschen und dergleichen zu nennen. Teilweise werden hierbei auch unterschiedliche Filter aktiviert, deaktiviert und in deren Effekt auf die empfangenen Signale verändert. Für derartige Hörprogramme, aber auch für eine bessere Filtereinstellung bspw. für Spracherkennung oder verbesserte Sprachwiedergabe, ist eine Kenntnis der Umgebung des Nutzers des Hörinstruments vorteilhaft. Für eine Lokalisierung von Schallquellen (bspw. TV-Geräte, Audio-Wiedergabegeräte oder dergleichen) kann unter anderem eine Richtwirkung mittels mehrerer Mikrofone erzeugt und genutzt werden. Bei der Verwendung von zwei Hörinstrumenten (eines für das jeweilige Ohr) kann hier auch der Abstand zwischen den beiden Hörinstrumenten zur besseren Lokalisation genutzt werden. Nicht akustisch aktive Objekte können hierbei aber nicht oder nur anhand gegebenenfalls detektierbarer Schallreflexionen lokalisiert werden.

Der Erfindung liegt die Aufgabe zugrunde, eine Lokalisierung auch nicht akustisch aktiver Objekte mittels eines Hörinstruments zu ermöglichen.

Diese Aufgabe wird erfindungsgemäß gelöst durch ein Hörinstrument mit den Merkmalen des Anspruchs 1. Vorteilhafte und teils für sich erfinderische Ausführungsformen und Weiterentwicklungen der Erfindung sind in den Unteransprüchen und der nachfolgenden Beschreibung dargelegt.

Das erfindungsgemäße Hörinstrument weist einen am Körper, insbesondere am Kopf, eines Nutzers zu tragenden Gerätekörper auf. Insbesondere handelt es sich bei dem Hörinstrument um ein Hörhilfegerät des Typs "Hinter-dem-Ohr" (BTE) mit integriertem oder auch mit externem ("RIC" für "receiver in canal" oder "ERU" für "external receiver unit") Lautsprecher. Das Hörinstrument weist zudem eine CW-Radareinheit ("continuous wave" oder Dauerstrichradar) auf, die in oder an dem Gerätekörper angeordnet ist und die dazu eingerichtet ist, ein unmoduliertes CW-Radarsignal auszusenden und ein korrespondierendes, reflektiertes Radarsignal zu empfangen. Außerdem weist das Hörinstrument einen Controller auf, der dazu eingerichtet ist, einen für einen Mikrodopplereffekt charakteristischen Signalanteil aus einem von der CW-Radareinheit auf den Empfang des reflektierten Radarsignals ausgegebenen Radarempfangssignal zu detektieren und daraus eine Entfernung des Gerätekörpers zu einem, insbesondere ortsfesten, Objekt in einer Umgebung des Nutzers zu ermitteln.

Bevorzugt handelt es sich bei der Radareinheit um einen "Standard-Radar-chipsatz", der Sende- und Empfangsantenne sowie Signalgenerator und weitere erforderliche Komponenten integriert hat. Dies hat den wirtschaftlichen Vorteil, dass marktverfügbare Radareinheiten genutzt werden können.

Die Erfindung geht dabei von der Überlegung aus, dass "klassische" Radar-Entfernungsmessverfahren üblicherweise gepulste und/oder frequenzmodulierte Radarsignale nutzen. Diese sind mit der erfindungsgemäß genutzten CW-Radareinheit jedoch nicht anwendbar und erfordern außerdem vergleichsweise hohen Rechen- und damit auch Energieaufwand. CW-Radar kann dagegen für Geschwindigkeits- oder Bewegungsdetektion genutzt werden, indem bspw. der Dopplereffekt genutzt wird. Sich am Nutzer vorbei bewegende Objekte (bspw. vorbeifahrende Kraftfahrzeuge, Fußgänger, Radfahrer und dergleichen) können zwar einen kurzzeitigen Einfluss auf den akustischen Eindruck des Nutzers haben, allerdings ist deren Effekt - insbesondere für eine Anpassung der Signalverarbeitung aufgrund der nur vergleichsweise kurzen Dauer - eher vernachlässigbar. Die Erfindung basiert aber dennoch auf der Erkenntnis, dass eine Bewegungsdetektion zur Entfernungsbestimmung genutzt werden kann. Es wird dabei jedoch nicht eine Bewegung des Objekts erfasst, sondern nur dessen relative Entfernungsänderung gegenüber dem Nutzer, der sich selbst bewegt, denn - und hier setzt die Erfindung an - Personen sind normalerweise stets zumindest geringfügig in Bewegung. So wird der Nutzer des Hörinstruments den Kopf kaum exakt stillhalten. Bereits geringfügige Bewegungen genügen aber, um sogenannte Mikrodopplereffekte im reflektierten und empfangenen Radarsignal detektieren zu können.

Unter dem Begriff "Mikrodopplereffekt" wird hier und im Folgenden insbesondere ein zu dem "bekannten" Dopplereffekt vergleichbarer, aber in der Intensität signifikant kleinerer Effekt verstanden, der insbesondere gegenüber üblicherweise mittels des Dopplereffekts erfassten ganzheitlichen Bewegungen eines Körpers, bspw. eines sich bewegenden Flugzeugs, einer gehenden Person, eines fahrendes Kraftfahrzeugs, klein ist und meist auf Bewegungen nur eines Teils des Körpers (z. B. Propeller eines Flugzeugs, Rotor eines Hubschraubers, Vibrationen des Körpers, schwingende Arme der gehenden Person) zurückgeht. Dies ruft meist Seitenbänder zu einer von der ganzheitlichen Bewegung des Körpers hervorgerufenen Doppler-Frequenzverschiebung hervor. "Charakteristisch" für einen solchen Mikrodopplereffekt sind also Signalanteile, die in deren Amplitude und/oder Frequenz auf einen solchen Effekt hindeuten. Erkanntermaßen bewegt sich der menschliche Körper, wenn er sich bewegt, nicht nur in seiner Gesamtheit, sondern zeigt stets kleine Bewegungen nur von Körperteilen. Beispielsweise bewegt sich der Kopf eines Menschen ständig in zumindest kleinen Bewegungsumfängen. Das am Kopf getragene Hörinstrument erfährt diese kleinen Bewegungen mithin ebenfalls. Mikrodopplereffekte sind bspw. beschrieben in V. C. Chen, F. Li, S.-S. Ho and H. Wechsler, "Micro-Doppler effect in radar: phenomenon, model, and simulation study," in IEEE Transactions on Aerospace and Electronic Systems, vol. 42, no. 1, pp. 2-21, Jan. 2006, doi: 10.1109/TAES.2006.1603402.

Eine solche, vorstehend genannte Detektion von Mikrodopplereffekten, die bereits durch geringfügige Bewegungen hervorgerufen werden, ist mittels der CW-Radareinheit vergleichsweise einfach möglich. Zwar würde ein meist im Basisband einer solchen CW-Radareinheit vorhandenes Gleichwert-Filter einen Gleichwert im Basisband, der bei einer Mischung des CW-Radarsignals mit dem reflektierten Radarsignal generiert wird, herausfiltern, für den Fall, dass die CW-Radareinheit und das Objekt ortsunveränderlich sind. Sobald jedoch Mikrodoppler - also eine geringfügige Bewegung des Gerätekörpers am Kopf des Nutzers und damit auch der CW-Radareinheit - vorliegen, wird ein solcher Gleichwert erfassbar (d. h. insbesondere nicht mehr von dem Filter herausgefiltert).

Bevorzugt wird dieser Gleichwert als Maß für die Signalleistung des empfangenen reflektierten Radarsignals herangezogen.

Gemäß einer zweckmäßigen Ausführung ist der Controller dazu eingerichtet, das Radarempfangssignal, zumindest den für den Mikrodopplereffekt charakteristischen Signalanteil, insbesondere mittels Fast-Fourier-Transformation, in dessen Frequenzbestandteile zu zerlegen.

Gemäß einer bevorzugten Ausführung ist der Controller dazu eingerichtet, für die Ermittlung der Entfernung einen digitalen FFT-Wert des charakteristischen Signalanteils, insbesondere dessen Gleichwerts, zu bestimmen. Vorzugsweise ist der Controller dazu eingerichtet, wie vorstehend beschrieben, diesen digitalen FFT-Wert für den Gleichwert als Maß für die Signalleistung heranzuziehen. Grundsätzlich liegt diesem Vorgehen die Erkenntnis zugrunde, dass mit geringer werdendem Abstand zu dem Objekt, bspw. einer Wand eines Raums, der digitale FFT-Wert größer wird. Diese Information kann also vorteilhaft zur Ermittlung der Entfernung zu dem Objekt genutzt werden.

Bevorzugt ist hierbei der Controller nämlich dazu eingerichtet, für die Ermittlung der Entfernung den FFT-Wert mit einer hinterlegten Menge an FFT-Vergleichswerten, die jeweils einem Entfernungswert zugeordnet sind, zu vergleichen. Vorzugsweise sind diese mehreren FFT-Vergleichswerte in einer Tabelle ("look up table" / "LUT") hinterlegt, die wiederum im Controller, genauer einem diesem zugeordneten Speicher, gespeichert ist. Dies stellt ein besonders rechenaufwandarmes Vorgehen dar.

Zweckmäßigerweise ist der Controller auch dazu eingerichtet, für die Ermittlung der Entfernung den (digitalen) FFT-Wert des charakteristischen Signalanteils bei oder im Bereich (d. h. +/-20 Hz) der Frequenz von 0 Hz, heranzuziehen (d. h. den digitalen FFT-Wert für den Gleichwert bei oder um 0 Hz zu bestimmen). Dies beruht auf der Überlegung, dass die "Zielobjekte" im vorliegenden Fall vorzugsweise stationär sind (insbesondere eine Wand des Raums, in dem sich der Nutzer befindet, und dergleichen) sowie dass zudem keine Bewegungen erkannt werden sollen.

Gemäß einer besonders zweckmäßigen Ausführung weist das Hörinstrument zusätzlich eine inertiale Messeinheit auf, die im oder am Gerätekörper angeordnet ist. Diese inertiale Messeinheit ("IMU") ist zur Bestimmung einer Veränderung einer Ausrichtung zumindest des Gerätekörpers im Raum eingerichtet und vorgesehen. Beispielsweise ist die IMU durch einen dreiachsigen Beschleunigungssensor oder einen anderen gyroskopischen Sensor gebildet oder umfasst einen solchen Sensor. Der Controller ist in diesem Fall vorzugsweise dazu eingerichtet, mittels der CW-Radareinheit zumindest dann die Entfernung des Gerätekörpers zu dem Objekt zu ermitteln, wenn mittels der inertialen Messeinheit eine Veränderung der Ausrichtung des Gerätekörpers ermittelt wird. Insbesondere ist der Controller dazu eingerichtet, mittels der IMU zu "verifizieren", ob sich der Gerätekörper (und somit mit hoher Wahrscheinlichkeit auch der Nutzer) bewegt und in welchem Bewegungsumfang, bspw. ob es sich nur um geringfügige Bewegungen im Bereich zwischen 0,5 und 10 cm (oder auch nur bis 5 cm) oder um größere Bewegungen (bspw. Gehen durch den Raum, Drehungen des ganzen Körpers oder dergleichen) handelt. Dadurch kann das Auftreten eines Mikrodopplereffekts im empfangenen (reflektierten) Radarsignal aufgrund einer Bewegung des Nutzers von einem Mikrodopplereffekt aufgrund einer Bewegung des Objekts (bspw. wenn sich eine Tür, ein Fensterflügel oder auch nur Blätter einer Pflanze bewegen) unterschieden werden. Für die Ermittlung der Entfernung sind die durch die Bewegung des Nutzers selbst verursachten Mikrodopplereffekte interessant. Optional ist der Controller auch dazu eingerichtet, zu bestimmen, ob der mittels der IMU erfasste Bewegungsumfang mit der "Stärke" des Mikrodopplereffekts übereinstimmt.

Gemäß einer zweckmäßigen Weiterbildung ist der Controller auch dazu eingerichtet, anhand der Entfernung sowie einer mittels der inertialen Messeinheit ermittelten Raumwinkelinformation über eine Blickrichtung des Nutzers eine Umgebungskarte, die Entfernungen zwischen dem Hörinstrument und Gegenständen in der Umgebung des Nutzers, insbesondere also zu Wänden und/oder anderen Objekten in einem Raum, in dem sich der Nutzer befindet, zu erstellen. Dieses Vorgehen basiert auf der Überlegung, dass der Gerätekörper stets zumindest in einer annähernd gleichen Positionierung am Kopf des Nutzers getragen wird und somit eine mittels der IMU erfasste Ausrichtungsänderung charakteristisch für eine Kopfdrehung und damit auch Blickrichtungsänderung ist. Insbesondere ist die IMU derart im oder am Gerätekörper angeordnet oder eingestellt, dass eine 0°-Richtung der IMU zumindest näherungsweise einer neutralen Blickrichtung (vorzugsweise der Sagittalrichtung) des Nutzers entspricht. Dreht sich nun der Nutzer oder zumindest dessen Kopf, kann der Raum, in dem sich der Nutzer befindet mittels der CW-Radareinheit schrittweise "abgetastet" und damit kartiert werden.

Die Kenntnis der Entfernung zu Objekten, in einem Raum insbesondere zu dessen Wände, kann vorteilhaft für die Signalverarbeitung sein. Denn Widerhalleffekte (auch als "reverberations" bezeichnet) der eigenen oder auch fremder Sprache von den Wänden, kann zu unerwünschten klanglichen Ereignissen, insbesondere zu verringerter Sprachwahrnehmung führen. Die Kenntnis der Entfernung kann dabei helfen, solche Effekte zu verringern, indem z. B. Filter entsprechend eingestellt werden. Vorzugsweise ist der Controller auch dazu eingerichtet, die Entfernung zu Wänden für die Anpassung von Parametern bei der Signalverarbeitung zu berücksichtigen, insbesondere indem Filterparameter entsprechend eingestellt werden. Beispielsweise sind hierbei zumindest Grundeinstellungen für ein entsprechendes Filter denkbar. Für Halleffektfilter sind bspw. Einstellungen für kleine oder große Räume, gefüllte Räume und dergleichen bekannt. Anhand der einzelnen Entfernungen kann eine zumindest grobe dreidimensionale Karte des Raums, in dem Sich der Nutzer befindet erstellt werden. Informationen, ob weitere Personen oder viele Möbel (was sich bspw. aus einem in der Horizontalen, aber auch der Vertikalen ungleichmäßigen Wandabstandsverlauf ergeben würde) vorhanden sind, können hierzu erhoben und berücksichtigt werden.

Gemäß einer weiteren zweckmäßigen Ausführung ist der Controller dazu eingerichtet, für die Ermittlung der Entfernung den digitalen FFT-Wert über eine vorgegebene Zeitspanne, insbesondere über 5 bis 40 Sekunden, vorzugsweise über 15 bis 30 Sekunden, zu mitteln. Dadurch kann die Genauigkeit der Entfernungsermittlung erhöht und insbesondere kurzzeitige Einflüsse auf die Ermittlung verringert werden.

Insbesondere für den Fall, dass die eingesetzte CW-Radareinheit kein Gleichwertfilter im Basisband aufweist, ist der Controller gemäß einer vorteilhaften Ausführung dazu eingerichtet, für die Ermittlung der Entfernung einen Kalman-Filter auf das Radarempfangssignal anzuwenden. Denn ohne ein solches Gleichwertfilter ist auch ein Gleichwert ohne Vorhandensein von Mikrodopplereffekten messbar. In diesem Fall können somit mehrere Gleichwerte (insbesondere zeitlich aufeinanderfolgend) erfasst werden. Diese können zur Ermittlung der Entfernung, insbesondere zur Steigerung der Genauigkeit insbesondere mittels eines Kalman-Filters vorteilhaft genutzt werden. Die Anwendung von Kalman-Filtern insbesondere im Bereich von Radarmessungen ist dabei grundsätzlich bekannt.

Gemäß einer zweckmäßigen Ausführung ist der Controller dazu eingerichtet, aus dem Radarempfangssignal, insbesondere dessen Frequenzdarstellung, eine Information über eine Bewegung eines Körperteils des Nutzers, insbesondere dessen Hand, zu ermitteln und diese zur Erkennung eines Eingabebefehls für eine Veränderung eines Signalverarbeitungsparameters des Hörinstruments heranzuziehen. Insbesondere ist der Controller dazu eingerichtet, Mikrodopplereffekte insbesondere im Bereich von 0 Hz abweichender Frequenzen, heranzuziehen, um solche körpereigenen Bewegungen (zumindest innerhalb des Erfassungsbereichs der CW-Radareinheit) zu erkennen und auszuwerten. Eine Detektion von Bewegungen einzelner Körperteile mittels Mikrodopplereffekten ist dabei bekannt (vgl. z. B.: Geisheimer, J. L., Greneker, E., and Marshall, W. S.: A high-resolution Doppler model of human gait. Proceedings of SPIE on Radar Technology, 2002).

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend wird ein Ausführungsbeispiel der Erfindung anhand einer Zeichnung näher erläutert. Darin zeigen:
- Fig. 1: in einer schematischen Darstellung ein Hörinstrument mit einer CW-Radareinheit,
- Fig. 2: in einem schematischen Diagramm eine Darstellung zweier reflektierter Radarsignale im Frequenzraum, und
- Fig. 3: in einer schematischen Darstellung eine Überblendung eines Polardiagramms mit einer Raumkarte.

Einander entsprechende Teile sind in allen Figuren stets mit gleichen Bezugszeichen versehen.

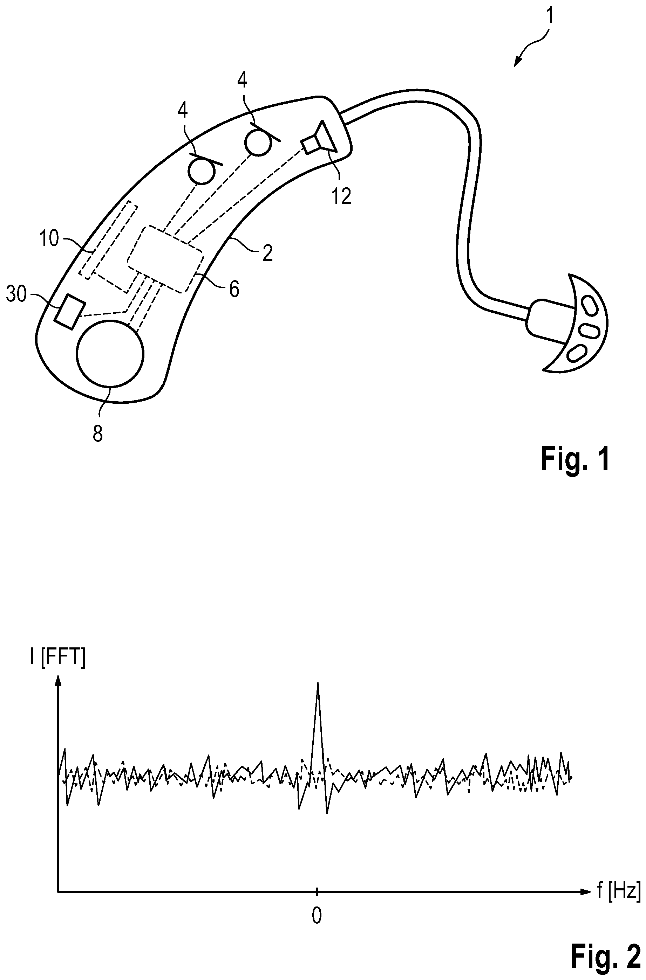

In Fig. 1 ist schematisch ein Hörinstrument, hier konkret ein Hörhilfegerät, kurz Hörgerät 1, dargestellt. Das Hörgerät 1 umfasst ein Gehäuse 2, das am Kopf eines Nutzers, konkret hinter dessen Ohr, zu tragen ist. Das Hörgerät 1 weist außerdem eine Anzahl von elektronischen Komponenten auf, die in dem Gehäuse 2 angeordnet sind. Zu diesen Komponenten gehören zwei Mikrophone 4, ein Signalprozessor 6 (auch: "Controller"), eine Energiequelle 8 (hier konkret eine wiederaufladbare Batterie inkl. Steuerungsschaltkreisen für Ladesteuerung und Energiebereitstellung) sowie eine CW-Radareinheit, kurz: "Radar-Chipsatz 10". Das Gehäuse 2 bildet dabei einen Gerätekörper des Hörgeräts 1. Die Mikrophone 4 sind auf den Signalprozessor 6 aufgeschaltet, der die Mikrophonsignale prozessiert (mischt, filtert, verstärkt und dergleichen). Ein dabei gebildetes Ausgangssignal des Signalprozessors 6 wird an einen Lautsprecher 12 des Hörgeräts 1 ausgegeben. Dieser Lautsprecher 12 ist im vorliegenden Ausführungsbeispiel im Gehäuse 2 angeordnet, kann aber alternativ auch als externer, im Gehörgang zu tragender Lautsprecher ausgebildet sein.

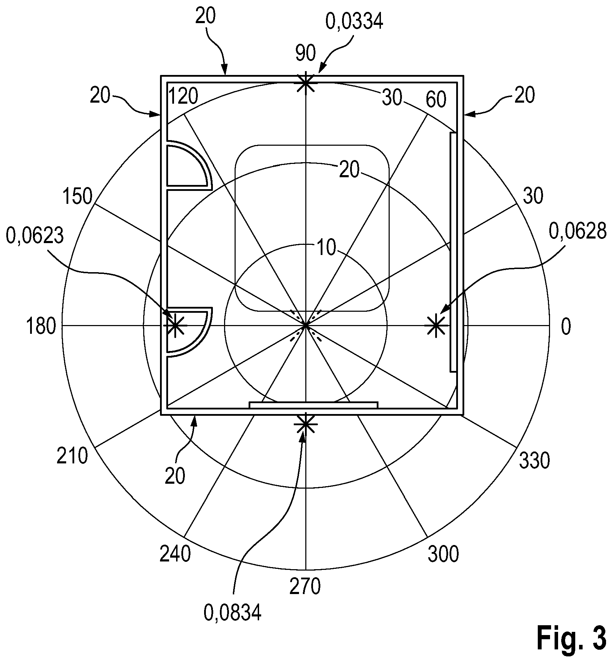

Der Signalprozessor 6 ist dazu eingerichtet, die Signalverarbeitung (Prozessierung) der Mikrophonsignale beispielsweise unter anderem auch in Abhängigkeit von den Abmessungen eines Raums, in dem sich der Nutzer befindet, konkret in Abhängigkeit von der Entfernung des Nutzers zu einer der Wände des Raums, anzupassen. Denn die Entfernungen des Hörgeräts 1 zu den Wänden kann bspw. genutzt werden, um Filter oder dergleichen zu beeinflussen, bspw. indem Filter für sogenannte reverberations besser eingestellt oder überhaupt erst aktiviert werden können. Um die Entfernung zu einem Objekt, konkret einer Wand 20 des Raums (s. Fig. 3) in der Umgebung des Nutzers zu schätzen, ist der Signalprozessor 6 dazu eingerichtet, ein im Folgenden näher beschriebenes Verfahren durchzuführen.

Der Signalprozessor 6 ist dabei dazu eingerichtet, den Radar-Chipsatz 10 dazu anzusteuern, ein unmoduliertes CW-Radarsignal auszusenden. Dieses wird von den Wänden und anderen Gegenständen, die sich im Strahlungsbereich einer Sendeantenne des Radar-Chipsatzes 10 (3 dB Abstrahlwinkel bspw. 65 Grad, jeweils nicht näher dargestellt) befinden, reflektiert. Das reflektierte Radarsignal wird von einer Empfangsantenne des Radar-Chipsatzes 10 (nicht näher dargestellt) empfangen. Der Radar-Chipsatz 10 gibt daraufhin ein Radarempfangssignal an den Signalprozessor 6 aus.

Der Signalprozessor 6 ist dazu eingerichtet, in dem Radarempfangssignal einen Signalanteil zu detektieren, der für einen Mikrodopplereffekt, zumindest einem der von einer der Wände 20 hervorgerufen wird, charakteristisch ist. Des Weiteren ist der Signalprozessor 6 dazu eingerichtet, aus diesem "charakteristischen" Signalanteil auf eine Entfernung eines Objekts, insbesondere zumindest einer der Wände 20 zum Hörgerät 1 zu schließen.

Dazu transformiert der Signalprozessor 6 das Radarempfangssignal in dessen Frequenzdarstellung mittels schneller Fourier-Transformation (FFT). Als relevante Frequenz für den Mikrodopplereffekt wird dabei 0 Hz (ggf. +/- 10-20 Hz) betrachtet, da die Wand 20 (oder auch andere Objekte) als stationär angenommen werden. Die Mikrodopplereffekte, die in der Frequenzdarstellung des Radarempfangssignals (vgl. Fig. 2) erkennbar sind, werden dabei durch geringfügige Bewegungen des Nutzers und damit auch des Gehäuses 2 (und somit auch des Radar-Chipsatzes 10), hervorgerufen. Ein Mikrodopplereffekt wird also nicht nur durch die Bewegung eines "Ziels" sondern auch des Senders und/oder des Empfängers hervorgerufen.

In Fig. 2 ist beispielhaft die FFT-Darstellung des Radarempfangssignals für den Fall, dass das Gehäuse 2 unbewegt ist und unbewegliche Objekte erfasst werden, mittels einer gestrichelten Kurve dargestellt. In diesem Fall wird lediglich Rauschen erfasst. In Fig. 2 ist außerdem der Fall des am Kopf getragenen Gehäuses 2 dargestellt, wobei lediglich unbewegliche Objekte erfasst werden (durchgezogene Kurve). Hierbei ist zu erkennen, dass im Bereich von 0 Hz ein Peak im Radarempfangssignal vorliegt.

Für 0 Hz bestimmt der Signalprozessor 6 zunächst die Leistung des Radarempfangssignals und vergleicht diesen Wert (auch als digitaler FFT-Gleichwert bezeichnet) mit einer Tabelle, in der Entfernungen für einzelne Leistungswerte hinterlegt sind. Für die höchste Amplitude wird dabei eine Wand als Objekt angenommen. Diesem Vorgehen liegt die Überlegung zugrunde, dass eine Wand in einem Raum mit hoher Wahrscheinlichkeit das Objekt mit der höchsten Reflektivität ist.

Das Hörgerät 1 umfasst außerdem zusätzlich auch eine inertiale Messeinheit 30, bspw. einen 3D-Beschleunigungssensor, zur Erfassung der Ausrichtung des Hörgeräts, insbesondere des Gehäuses 2 im Raum. Der Signalprozessor 6 ist dabei dazu eingerichtet, die vorstehende Ermittlung der Entfernung des Hörgeräts 1 zu einem Objekt aus der Umgebung nur dann vorzunehmen, wenn mittels der inertialen Messeinheit 30 eine Bewegung des Hörgeräts 1 erfasst wird. Dadurch kann auf einfache Weise von dem Signalprozessor 6 bestimmt werden, dass im Radarempfangssignal vorhandene Mikrodopplereffekte von einer Bewegung des Nutzers oder zumindest des Hörgeräts 1 herrühren oder - insbesondere, wenn die inertiale Messeinheit 30 keine Bewegung des Nutzers anzeigt - von einer Bewegung eines bspw. größeren Objekts in der Umgebung des Nutzers.

Des Weiteren ist der Signalprozessor 6 dazu eingerichtet, eine Karte des Raums, in dem sich das Hörgerät 1 befindet, zu erstellen. Dafür erfasst der Signalprozessor 6 mittels der inertialen Messeinheit 30 die aktuelle Ausrichtung des Hörgeräts 1 im Raum und kann für diese Ausrichtung die Entfernung der jeweiligen Wand 20 ermitteln. In Fig. 3 ist dies beispielhaft anhand eines Polardiagramms dargestellt, bei dem 0 Grad auf einer "3-Uhr-Position" liegt. Hier beträgt der digitale FFT-Gleichwert beispielhaft 0,0628 (hier als einheitenlos angenommen) und auf 180 Grad 0,0623. Der Nutzer befindet sich hier also etwa auf einer Raummittelachse. Für die 90 Grad-Richtung beträgt der digitale FFT-Gleichwert 0,0334 und für 270 Grad 0,0834. Der Nutzer befindet sich somit mit dem Rücken näher zur dortigen Wand 20 als zur auf 90 Grad liegenden Wand 20.

Für eine höhere Genauigkeit ist der Signalprozessor 6 optional dazu eingerichtet, den digitalen FFT-Wert über einen Zeitraum von 30 Sekunden und über fünf in diesem Zeitraum erfolgte Messungen zu mitteln.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

### Bezugszeichenliste

- 1: Hörgerät
- 2: Gehäuse
- 4: Mikrophon
- 6: Signalprozessor
- 8: Energiequelle
- 10: Radar-Chipsatz
- 12: Lautsprecher
- 20: Wand
- 30: inertiale Messeinheit

## Patentansprüche

1. Hörinstrument (1), aufweisend
- einen am Körper, insbesondere am Kopf, eines Nutzers zu tragenden Gerätekörper (2),
- eine CW-Radareinheit (10), die in oder an dem Gerätekörper (2) angeordnet ist und die dazu eingerichtet ist, ein unmoduliertes, CW-Radarsignal auszusenden und ein korrespondierendes, reflektiertes Radarsignal zu empfangen, und
- einen Controller (6), der dazu eingerichtet ist, einen für einen Mikrodopplereffekt charakteristischen Signalanteil aus einem von der CW-Radareinheit (10) auf den Empfang des reflektierten Radarsignals ausgegebenen Radarempfangssignal zu detektieren und daraus eine Entfernung des Gerätekörpers (2) zu einem Objekt (20) in einer Umgebung des Nutzers zu ermitteln.

2. Hörinstrument (1) nach Anspruch 1,
wobei der Controller (6) dazu eingerichtet ist, das Radarempfangssignal, zumindest den charakteristischen Signalanteil, insbesondere mittels Fast-Fourier-Transformation, in dessen Frequenzbestandteile zu zerlegen.

3. Hörinstrument (1) nach Anspruch 1 oder 2,
wobei der Controller (6) dazu eingerichtet ist, für die Ermittlung der Entfernung einen digitalen FFT-Wert des charakteristischen Signalanteils, insbesondere dessen Gleichwerts, zu bestimmen.

4. Hörinstrument (1) nach Anspruch 3,
wobei der Controller (6) dazu eingerichtet ist, für die Ermittlung der Entfernung den FFT-Wert des charakteristischen Signalanteils bei oder im Bereich der Frequenz von 0 Hz, d. h. 0 +/-20 Hz, heranzuziehen.

5. Hörinstrument (1) nach Anspruch 3 oder 4,
wobei der Controller (6) dazu eingerichtet ist, für die Ermittlung der Entfernung den FFT-Wert mit einer hinterlegten Menge an FFT-Vergleichswerten, die jeweils einem Entfernungswert zugeordnet sind, zu vergleichen.

6. Hörinstrument (1) nach einem der Ansprüche 1 bis 5,
aufweisend eine inertiale Messeinheit (30), die im oder am Gerätekörper (2) angeordnet ist und die zur Bestimmung einer Veränderung einer Ausrichtung zumindest des Gerätekörpers (2) im Raum eingerichtet und vorgesehen ist, wobei der Controller (6) dazu eingerichtet ist, mittels der CW-Radareinheit (10) zumindest dann die Entfernung des Gerätekörpers (2) zu dem Objekt zu ermitteln, wenn mittels der inertialen Messeinheit (30) eine Veränderung der Ausrichtung des Gerätekörpers (2) ermittelt wird.

7. Hörinstrument (1) nach einem der Ansprüche 3 bis 6,
wobei der Controller (6) dazu eingerichtet ist, für die Ermittlung der Entfernung den digitalen FFT-Wert über eine vorgegebene Zeitspanne, insbesondere über 5 bis 40, vorzugsweise über 15 bis 30 Sekunden, zu mitteln.

8. Hörinstrument (1) nach Anspruch 6 oder 6 und 7,
wobei der Controller (6) dazu eingerichtet ist, anhand der Entfernung sowie einer mittels der inertialen Messeinheit (30) ermittelten Raumwinkelinformation über eine Blickrichtung des Nutzers eine Umgebungskarte, die Entfernungen zwischen dem Hörinstrument und Gegenständen in der Umgebung des Nutzers enthält, insbesondere zu Wänden und/oder anderen Objekten in einem Raum, in dem sich der Nutzer befindet, zu erstellen.

9. Hörinstrument (1) nach einem der Ansprüche 1 bis 8,
wobei der Controller (6) dazu eingerichtet ist, für die Ermittlung der Entfernung einen Kalman-Filter auf das Radarempfangssignal anzuwenden.

10. Hörinstrument (1) nach einem der Ansprüche 1 bis 9,
wobei der Controller (6) dazu eingerichtet ist, aus dem Radarempfangssignal, insbesondere dessen Frequenzdarstellung, eine Information über eine Bewegung eines Körperteils des Nutzers, insbesondere dessen Hand, zu ermitteln und diese zur Erkennung eines Eingabebefehls für eine Veränderung eines Signalverarbeitungsparameters des Hörinstruments (1) heranzuziehen.
